# EUROPEAN PATENT APPLICATION

(11) **EP 1 022 124 A1**
(43) Date of publication of application: **26.07.2000**
(21) Application number: 00200215.2
(22) Date of filing: 20.01.2000
(51) Int. Cl.: B31D 5/00

(54) **Device for manufacturing cushions filled with a gaseous medium**

(30) Priority: 20.01.1999 NL 1011095
(71) Applicant: Case Packing Sales Europe B.V., 6039 AP Stramproy (NL); Free-Flow Packaging International, Inc., Redwood City, California 94063-3120 (US)
(72) Inventor: Aquarius, Pieter Theodorus Joseph, 6039 ZH Stramproy (NL)
(74) Representative: Ferguson, Alexander

(57) **Abstract**

Device for manufacturing cushions filled with a gaseous medium from synthetic tubular foil, which device is provided with supply means for supplying flexible tubular foil in a supply direction, perforation means for making preferably a row of perforations in the tubular foil, which perforation means are situated at a first station, introduction means for introducing a gaseous medium through the perforations, which introduction means are situated at the first station, and welding means for making a transverse weld on either side of the perforations for closing off the tubular foil and sealing the perforations, which welding means are situated at the first station. The perforation means are provided with a blade which can be moved transverse to a plane of the tubular foil and which blade has a number of teeth each for making a perforation in the tubular foil, and with two pairs of jaws placed on either side of the blade for clampingly engaging the tubular foil for holding the tubular foil while the perforations are being made, the tubular foil being transportable between the pairs of jaws, at least one pair of jaws being moveable transverse to a plane of the tubular foil until in abutment with the tubular foil. The blade is situated between tow adjacent jaws of one pair of jaws. The introduction means are situated between the jaws of the other pair of jaws. The welding means comprise welding jaws situated between the one pair of jaws.

## Description

The present invention relates to a device for manufacturing cushions filled with a gaseous medium, for instance air, from synthetic tubular foil.

International patent application W094/07678 describes such a device for manufacturing small air-filled cushions or bags, for use as protective filling material when packaging fragile parts and other objects in cargo boxes or the like. The cushions are made by forming a weld over the tubular foil, introducing air into the foil by inserting a needle through the wall of the tubular foil, and subsequently forming another weld over the tubular foil where the air was introduced to close off the cushion and to seal the hole made by the needle. Consecutive cushions leave the device as either a number of cushions connected to each other, or they can be separated in order to be used separately.

In practice it appeared that said device has some limitations and drawbacks, and that many cushions are not sufficiently filled with air. Because of the flexible tubular foil it is difficult to insert the needle through the wall of the tubular foil, without the needle pricking through the wall (or opposite wall) for a second time. When this happens air escapes via the second hole before the holes have been sealed. When the second hole is outside the area that will be sealed the air will continuously escape even after the cushion has been sealed. Moreover said known device for manufacturing bags filled with a gaseous medium is provided with various stations for performing the various necessary treatments, such as welding, the introduction of air, the separation of adjacent bags. This renders the device somewhat sizeable.

It is amongst others an object of the present invention to provide a device for manufacturing cushions filled with a gaseous medium, with which cushions can reproducibly be filled, and which has a very compact construction.

To that end the present invention provides a device for manufacturing cushions filled with a gaseous medium from synthetic tubular foil, which device is provided with supply means for supplying flexible tubular foil in a supply direction, perforation means for making at least one perforation in the tubular foil, which perforation means are situated at a first station, introduction means for introducing a gaseous medium through the perforation, which introduction means are situated at the first station, and welding means for making a transverse weld on either side of the perforation for closing off the tubular foil and sealing the perforation, which welding means are situated at the first station. By inserting gaseous medium in the tubular foil in this manner, and sealing the perforation on either side after that, a reproducible filling with gaseous medium is guaranteed. Because all treatments take place at one station, not only is the construction of the device compact, but it is also possible to freely choose the length of the cushion filled with gaseous medium. In the known device the length of the cushion is determined by the distance between the separate stations, and therefore cannot vary.

Further embodiments and advantages of a device for manufacturing cushions filled with a gaseous medium will appear clearly on the basis of the description given below of some exemplary embodiments of the invention, which should be considered merely as illustrations and not as limiting. In which drawing:
Figure 1 schematically shows a device according to the invention in the transport position;
Figure 2 schematically shows a device according to the invention in the perforation position;
Figure 3 schematically shows a device according to the invention in the position for introducing a gaseous medium;
Figure 4 schematically shows a device according to the invention in the welding position, and
Figure 5 schematically shows in side view a part of a plate of the introduction means of the device according to the present invention.

The present invention will below be described on the basis of air as gaseous medium. It will however be clear that cushions or bags may also be filled with another gaseous medium such as nitrogen, oxygen, helium and the like.

Furthermore the operation of the parts will not be described as this is standard in the art. For instance the rotating movements can be generated by electric motors. Furthermore the reciprocal movements of the separate parts can also be caused by separate motors, or by common control by means of a driven curve roller. Examples of such a drive can for instance be found in European patent application No. 0.836.926, and in the above-mentioned International patent application.

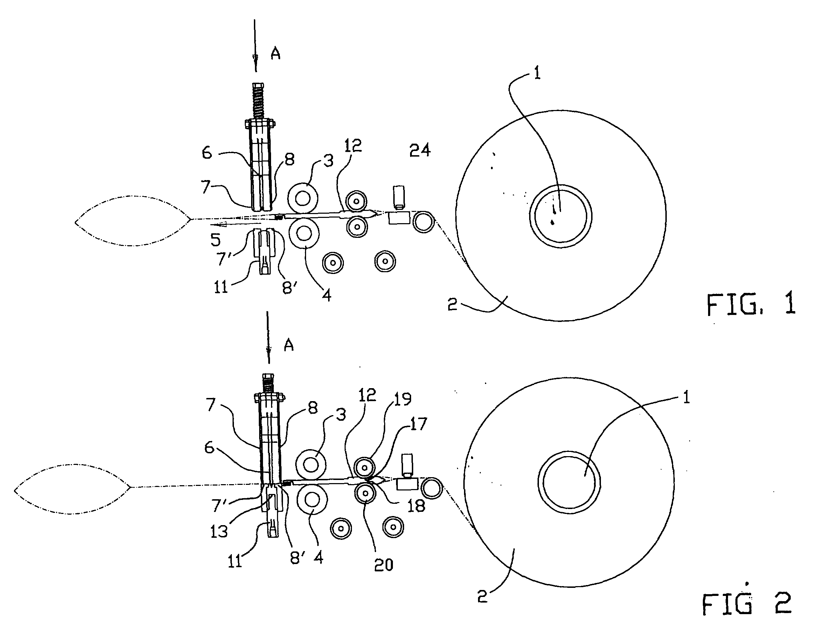

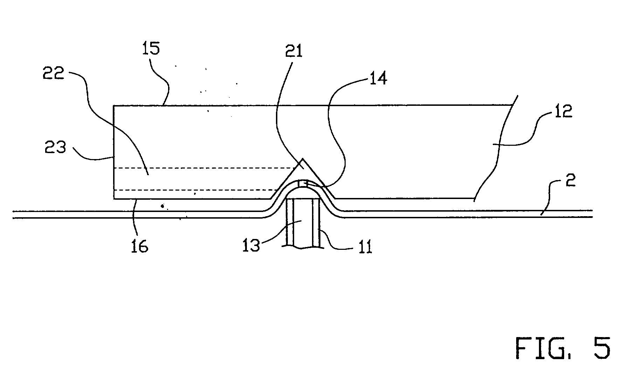

In the figures 1-4 an exemplary embodiment of a device for the manufacturing of air-filled cushions is schematically shown in four positions, namely the position for transporting the tubular foil, the position for perforating the tubular foil, the position for introducing air in the tubular foil, and the position for welding or cutting off the tubular foil. The device preferably is provided with a carrier 1 for carrying the roll of tubular foil 2. However, it is also possible that the tubular foil 2 is supplied by a separate supply device.

The device is provided with two transport rollers 3, 4 in between which the tubular foil 2 can be passed. The two transport rollers 3, 4 preferably are springmounted with respect to each other, and press against each other to such an extent that they hold the tubular foil 2. By rotation of the transport rollers 3, 4 the tubular foil is pulled from the roll 2, so that the tubular foil 2 is transported in a supply direction 5 through the device. To that end the transport rollers 3, 4 at their surfaces are provided in a known manner with a material of a sufficient friction coefficient.

Furthermore the device comprises perforation means 6 for making at least one perforation in the tubular foil, preferably a row of perforations, which row extends transverse to the supply direction 5. Said perforation means 6 are situated at a first station A. Preferably the perforation means 6 are provided with a blade which can be moved transverse to a plane of the tubular foil 2 and which blade has a number of teeth. Each tooth is suitable for making a perforation in the tubular foil 2. The perforation means 6 further comprise two pairs of jaws 7,8 ; 7', 8' placed on either side of the blade 6 for clampingly engaging the tubular foil 6 for holding the tubular foil 2 while the perforations are being made. It will be clear that the tubular foil 2 is transportable between the one pair of jaws 7, 8, and the other pair of jaws 7', 8' because of the action of the transport rollers 3, 4.

Although one pair of jaws can be fixedly arranged, and the other pair of jaws is moveable transverse to a plane of the tubular foil 2 until in abutment with the tubular foil 2, it is preferred that both pairs of jaws 7,8 ;7', 8' are moveable transverse to the plane of the tubular foil 2 until in abutment with the tubular foil 2.

Furthermore the perforation means can be created by two opposite blades, but in order to obtain a very compact construction it is preferred that only one blade is provided which is situated between two adjacent jaws (7,8 in the shown example) of one pair of jaws.

The blade 6 thus provides perforations when penetrating through the tubular foil 2. It is of importance here that the distance over which the blade moves through the tubular foil 2 is smaller than the size of the teeth of the blade 6, for forming separate perforations. Said perforations serve for the introduction of air into the tubular foil 2. However, it is also possible to move the blade 6 over such a distance, depending on the size of the teeth, that the tubular foil is cut through.

The device is also provided with introduction means 11, 12 for introducing air into the tubular foil. Said introduction means as well (at least an essential part of them) are situated at the first station A. The introduction means 11 for the supply and introduction of air are moveable transverse to the plane of the tubular foil 2 until in abutment with the tubular foil 2. The introduction means 11 here are preferably provided with at least one medium introduction aperture 13 (figure 2 and 5), preferably a row of medium introduction apertures, which communicates with the at least one perforation (14 figure 5) or with the row of perforations, respectively, when the introduction means 11 abut the tubular foil 2.

Although the medium introduction means could be placed next to the blade, it is preferred for sake of simplicity of the construction, that the introduction means 11 are situated between the jaws 7', 8' which abut the pair of jaws 7, 8 in between which the blade 6 is situated.

For introducing air into the tubular foil 2 via the perforation 14 or the row of perforations, the introduction means are provided with a plate 12 which can be placed within the tubular foil 2. During operation of the device said plate 12 is held within the tubular foil 2. To that end the plate 12 is provided with a retaining recess 17, 18 (figure 2) in both its main planes 15, 16 (figure 5), which retaining recesses are situated opposite each other. Two retaining rollers 19, 20 lie such in the retaining recesses 17, 18 that the plate 12 is retained during operation, whereas it is still possible that the tubular foil 2 can be pulled through between the plate and the retaining rollers 19, 20. Preferably the retaining rollers 19, 20 can be moved in the supply direction. The plate 12 keeps the walls of the tubular foil 2 apart, so that air can easily be introduced into the tubular foil 2.

The plate 12 has a groove 21 extending transverse to the supply direction 5. One or several apertures 22 extending through the plate 12 on the one hand debouch in the groove 21 and on the other hand debouch in an end 23 of the plate 12 situated downstream as seen in the supply direction (figure 5). The medium introduction aperture 13 can be placed in the groove 21.

For obtaining a compact though simple construction the welding means comprise welding jaws 9, 10 (in this exemplary embodiment) situated between the two jaws 7, 8. A weld in a synthetic foil is made here by means of sealing with heat. To that end the welding jaws comprise heating means. Said heating means comprise heated planes in between which the foil is clamped and is sealed by means of heating.

Below on the basis of figures 1-5 the operation of the device according to the present invention will be discussed in short.

In figure 1 the transport position of the device is shown, in which the jaws 7, 8; 7', 8', and the welding jaws as well as a security blocking 24 do not exert a retaining clamping action on the tubular foil 2. In this position the transport rollers 3, 4 are capable of transporting the tubular foil 2 through the device according to the supply direction 5.

When the tubular foil 2 has moved over a wanted distance through the device, the pairs of jaws 7, 8; 7', 8' are moved until in abutment with each other. As a result the tubular foil 2 can no longer move. Although it is usual to provide carrier 1 with a brake, so that when the transport rollers 3, 4 are not working the movement of the tubular foil 2 is stopped immediately, with large rolls of tubular foil it is particularly preferred to use the security blocking 24. In the position shown in figure 2 said security blocking 24 as well clamps the tubular foil 2. In this position the blade 6 is moved downwards, so that at least one perforation or a row of perforations is formed. Subsequently the blade 6 is moved upwards again until at a distance from the tubular foil 2.

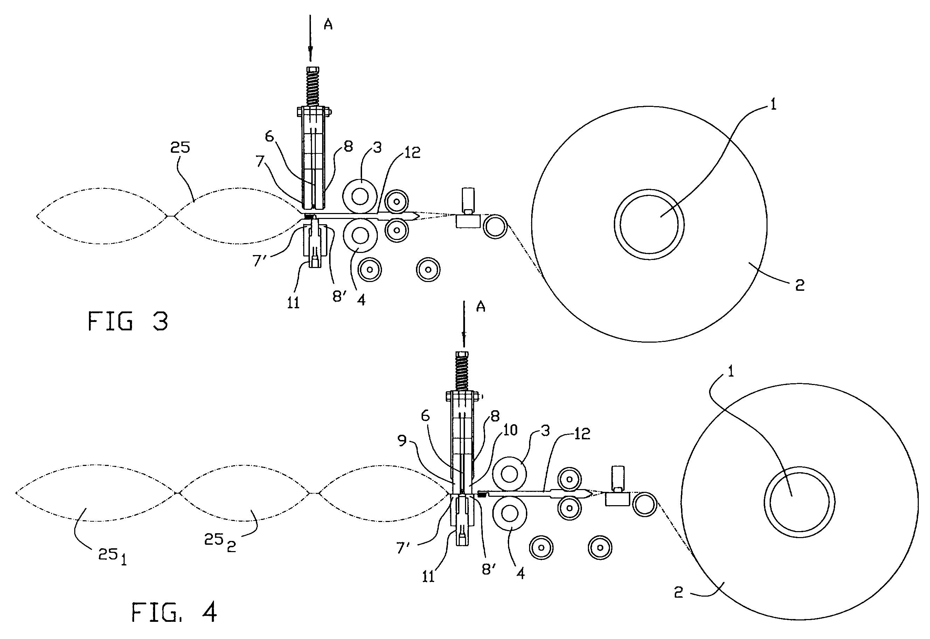

After that the jaws 7, 8; 7', 8' are moved apart, and by means of a movement in the supply direction 5 of the retaining rollers 19, 20 the plate 12 is moved forward over such a distance that the groove 21 of the plate 12 surrounds the perforations in the wall of the tubular foil 2 (figure 3). Then the introduction means 11 is lifted until it is in the groove 21, after which air is inserted through the introduction means 11. Said air enters the groove 21 via the medium introduction aperture 13 through the perforation 14, and subsequently enters the tubular foil 2 via the apertures 22 (figure 5), as a result of which a filled cushion 25 is made.

Subsequently the introduction means 11 is lowered, the plate 12 is put in its initial position again, and the welding jaws 9, 10 are brought into abutment with the tubular foil 2, and an accompanying part of the jaws 7', 8', for making the transverse welds. Possibly after that the blade 6 can be lowered such that the cushion 25 made is cut off from the rest of the tubular foil 25.

An extremely important additional advantage of a device according to the present invention is that now cushions of various lengths (see figure 4; cushion 25₁ of length L₁, cushion 25₂ of length L₂) can be made. In order to still obtain sufficient filling of larger cushions, either the air pressure for introducing air is increased or the period of time during the which the air is introduced is increased.

## Claims

1. Device for manufacturing cushions filled with a gaseous medium from synthetic tubular foil, which device is provided with:
supply means for supplying flexible tubular foil in a supply direction,
perforation means for making at least one perforation in the tubular foil, which perforation means are situated at a first station,
introduction means for introducing a gaseous medium through the perforation, which introduction means are situated at the first station, and
welding means for making a transverse weld on either side of the perforation for closing off the tubular foil and sealing the perforation, which welding means are situated at the first station.

2. Device according to claim 1, in which the perforation means for making at least one perforation in the tubular foil, are perforation means for making a row of perforations, which row extends transverse to the supply direction.

3. Device according to claim 2, in which the perforation means for making a row of perforations in the tubular foil are provided with a blade which can be moved transverse to a plane of the tubular foil and which blade has a number of teeth each for making a perforation in the tubular foil, and with two pairs of jaws placed on either side of the blade for clampingly engaging the tubular foil for holding the tubular foil while the perforations are being made, the tubular foil being transportable between the jaws, at least one pair of jaws being moveable transverse to a plane of the tubular foil until in abutment with the tubular foil.

4. Device according to claim 3, in which the blade is situated between two adjacent jaws of one pair of jaws.

5. Device according to claim 3 or 4, in which both pairs of jaws can be moved transverse to a plane of the tubular foil until in abutment with the tubular foil.

6. Device according to claim 3, 4 or 5, in which the blade can be moved over such a distance that the tubular foil can be cut through.

7. Device according to any one of the preceding claims, in which the introduction means for introducing a gaseous medium through the perforation can be moved transverse to a plane of the tubular foil until in abutment with the tubular foil, and are provided with at least one medium introduction aperture which communicates with at least one perforation when the introduction means abut the tubular foil.

8. Device according to claim 7 referring to claim 2, in which the introduction means are provided with a row of medium introduction apertures, which row extends transverse to the supply direction, in which each medium introduction apertures of the row of medium introduction apertures communicates with the accompanying perforation when the introduction means abut the tubular foil.

9. Device according to claim 4, in which the introduction means are situated between the jaws of the other pair of jaws.

10. Device according to any one of the preceding claims, in which the introduction means are provided with a plate which can be placed within the tubular foil and during operation of the device is kept within the tubular foil, which plate keeps the walls of the tubular foil apart, and is provided with apertures for guiding the gaseous medium into the tubular foil.

11. Device according to claim 2 and 10 and 7 or 8, in which the plate has a number of main planes, a groove extending transverse to the supply direction and apertures extending through the plate, which apertures on the one hand debouch in the groove and on the other hand debouch in an end of the plate situated downstream as seen in the supply direction, in which the medium introduction aperture can be placed in the groove.

12. Device according to claim 11, in which the plate is provided with a retaining recess in both main planes, in which the retaining recesses are situated opposite each other, and in which the device is provided with two retaining rollers for abutment in the respective retaining recesses.

13. Device according to claim 12, in which the retaining rollers can be moved in the supply direction.

14. Device according to claim 4, in which the welding means for making a transverse weld on either side of the perforation for closing off the tubular foil and sealing the perforation are welding jaws situated between the one pair of jaws.

15. Device according to any one of the preceding claims, in which the welding means comprise heating means.

16. Device according to any one of the preceding claims, in which the device is provided with a carrier for carrying a roll of tubular foil.
